# EUROPEAN PATENT APPLICATION

(11) **EP 4 365 543 A1**
(43) Date of publication of application: **08.05.2024**
(21) Application number: 22832793.8
(22) Date of filing: 13.06.2022
(51) Int. Cl.: G01B 11/25, G01B 11/30

(54) **MEASURING INSTRUMENT, METHOD FOR CALCULATING SURFACE EVALUATION INDEX, AND PROGRAM**

(30) Priority: 28.06.2021 JP 2021106980
(71) Applicant: KONICA MINOLTA, INC., Tokyo 100-7015 (JP)
(72) Inventor: MOCHIDA Syogo, Tokyo 100-7015 (JP); UDA Takushi, Tokyo 100-7015 (JP); TERAOKA Yoshitaka, Tokyo 100-7015 (JP)
(74) Representative: Gille Hrabal Partnerschaftsgesellschaft mbB Patentanwälte
(86) International application number: PCT/JP2022/023642
(87) International publication number: WO 2023/276637

(57) **Abstract**

A measuring device includes a single illuminating means (1) capable of irradiating a measurement object with illumination light, a two-dimensional photoelectric conversion means (3) disposed at a position where the two-dimensional photoelectric conversion means can receive light specularly reflected from the measurement object out of the illumination light emitted from the illuminating means (1) to the measurement object (100), a profile distribution acquiring means (4) that acquires a surface profile distribution of the measurement object based on an electrical signal obtained by the two-dimensional photoelectric conversion means (3), a luminance distribution acquiring means (4) that acquires a two-dimensional luminance distribution of the measurement object based on the electrical signal acquired by the two-dimensional photoelectric conversion means (4), and a calculating means (4) that calculates a surface evaluation index of the measurement object using at least one of the surface profile distribution (101) of the measurement object acquired by the profile distribution acquiring means and the two-dimensional luminance distribution (102) of the measurement object acquired by the luminance distribution acquiring means.

## Description

### Technical Field

The present invention relates to a measuring device, a method of calculating a surface evaluation index, and a program capable of obtaining an evaluation index of a surface of an automobile interior component subjected to surface texturing.

### Background Art

The quality control of interior automobile components subjected to surface processing typified by surface texturing or the like is performed using color, gloss, and the like as management indices. However, in recent years, in order to manage texture that cannot be quantified only by color or gloss, there is a movement to measure two-dimensional gloss information or height information (the same as profile information) of a surface of an interior component and index the information so as to match the visual observation of an inspector.

Patent Literature 1 discloses a surface roughness and contour shape measuring apparatus in which a contour shape measuring device moves a pickup having a stylus along a surface of a measurement object, converts a displacement amount of the stylus into an electrical signal, and reads the electrical signal with a computing machine to measure surface roughness and a contour shape (height information) of the measurement object.

Specifically, by relatively moving the pickup and the measurement object, it is possible to measure the contour shape in two directions, that is, in an XY plane. By performing calculation processing on the acquired three-dimensional height information (topography), it is possible to calculate surface roughness indices Ra, Sa, and the like defined by ISO-4287, ISO-25178, and the like.

However, the technique disclosed in Patent Literature 1 has the following problems.
A) Since only one-dimensional information is acquired during the movement of the pickup, it takes time to measure two-dimensional information.
B) Since a two-dimensional gloss distribution cannot be acquired, a visual correlation is not ensured.

A measurement object having deep unevenness such as surface texturing has a high visual correlation with a change in gloss due to the unevenness. Therefore, if information on the unevenness can be acquired from the two-dimensional gloss distribution and a surface profile distribution, information corresponding to the unevenness of the measurement object can be visualized and quantified.

As described above, the apparatus described in Patent Literature 1 is insufficient for achieving quality control with a high visual correlation according to the unevenness of the measurement object subjected to surface texturing or the like.

Meanwhile, Patent Literature 2 proposes an apparatus that can acquire a surface profile distribution and two-dimensional gloss from a measurement object of an automobile interior component. With this apparatus, the measurement of the surface profile distribution is performed based on a "photometric stereo method". Regarding the acquisition of the surface profile distribution, four light sources (2) are arranged in directions orthogonal to the left-right direction and the front-rear direction, and each illuminates a sample (10) in a direction of 45° from the normal direction of the sample (10). The illumination light is received by a light receiver (4) arranged on a normal to the sample, and the surface inclination of the sample is estimated from four pieces of information corresponding to each light source. However, the estimation is based on the assumption that the light reflection characteristic of the sample is a cos characteristic (Lambertian).

In the acquisition of two-dimensional gloss, illumination light from another light source (6) is reflected off a beam splitter (18). The sample (10) is illuminated from a vertical direction, and the illumination light is received by the light receiver (4).

### Citation List

### Patent Literature

Patent Literature 1: JP 2006-118911 A
Patent Literature 2: US 2015/0369595 A

### Summary of Invention

### Technical Problem

However, although the surface profile distribution and the two-dimensional gloss can be acquired by the apparatus disclosed in Patent Literature 2, the following problems occur.
1. In a case where light specularly reflected from a measurement object is significantly different in intensity from light diffusely reflected from the measurement object, dynamic range securing processing on the sensor side is required. Therefore, as a result, an SN ratio may decrease, and the accuracy of a surface evaluation index may decrease.
2. The measurement of the surface profile distribution and the measurement of the two-dimensional gloss are performed by different illumination optical systems, and a plurality of light sources are present. Due to this, there is a possibility that the illuminance on the measurement object varies due to a difference between individuals, the accuracy of reconstructing the surface profile distribution decreases, and the accuracy of the surface evaluation index decreases.

The present invention has been made in view of such a technical background, and an object of the present invention is to provide a measuring device, a method of calculating a surface evaluation index, and a program capable of obtaining a highly accurate surface evaluation index of a measurement object.

### Solution to Problem

The above-described object is achieved by the following means.
(1) A measuring device includes a single illuminating means capable of irradiating a measurement object with illumination light, a two-dimensional photoelectric conversion means disposed at a position where the two-dimensional photoelectric conversion means can receive light specularly reflected from the measurement object out of the illumination light emitted from the illuminating means to the measurement object, a profile distribution acquiring means that acquires a surface profile distribution of the measurement object based on an electrical signal obtained by the two-dimensional photoelectric conversion means, a luminance distribution acquiring means that acquires a two-dimensional luminance distribution of the measurement object based on the electrical signal obtained by the two-dimensional photoelectric conversion means, and a calculating means that calculates a surface evaluation index of the measurement object using at least one of the surface profile distribution of the measurement object acquired by the profile distribution acquiring means and the two-dimensional luminance distribution of the measurement object acquired by the luminance distribution acquiring means.
(2) A measuring device includes a profile distribution acquiring means that acquires a surface profile distribution of a measurement object based on an electrical signal obtained by a two-dimensional photoelectric conversion means disposed at a position where the two-dimensional photoelectric conversion means can receive light specularly reflected from the measurement object out of illumination light emitted from a single illuminating means to the measurement object, a luminance distribution acquiring means that acquires a two-dimensional luminance distribution of the measurement object based on the electrical signal obtained by the two-dimensional photoelectric conversion means, and a calculating means that calculates a surface evaluation index of the measurement object using at least one of the surface profile distribution of the measurement object acquired by the profile distribution acquiring means and the two-dimensional luminance distribution of the measurement object acquired by the luminance distribution acquiring means.
(3) In the measuring device as recited in aforementioned Item 1 or 2, the profile distribution acquiring means acquires the surface profile distribution of the measurement object by calculation based on an electrical signal obtained by the two-dimensional photoelectric conversion means when light specularly reflected from the measurement object when the measurement object is irradiated with illumination light having a plurality of sinusoidal wave patterns with different phases by the illuminating means in a time-division manner is received by the two-dimensional photoelectric conversion means.
(4) In the measuring device as recited in aforementioned Item 1 or 2, the luminance distribution acquiring means acquires a luminance distribution of the measurement object by calculation based on an electrical signal obtained by the two-dimensional photoelectric conversion means when light specularly reflected from the measurement object when the measurement object is irradiated with illumination light having a pattern of a constant value by the illuminating means is received by the two-dimensional photoelectric conversion means.
(5) In the measuring device as recited in any one of the aforementioned Items 1 to 4, a spatial resolution of the two-dimensional photoelectric conversion means is 100 µm or less.
(6) In the measuring device as recited in any one of the aforementioned Items 1 to 5, a surface of the measurement object is subjected to surface texturing, and the surface evaluation index is an index relating to a characteristic amount of the surface subjected to the surface texturing.
(7) In the measuring device as recited in any one of the aforementioned Items 1 to 6, before the calculation of the surface evaluation index, the calculating means performs first region division for dividing the surface profile distribution into a plurality of closed regions according to a height of the surface profile distribution by using a watershed segmentation method.
(8) In the measuring device as recited in the aforementioned Item 7, the calculating means performs low-frequency filtering processing for removing a high-frequency component of the surface profile distribution before performing the first region division.
(9) In the measuring device as recited in the aforementioned Item 7 or 8, the calculating means deletes coordinate information representing a closed region in contact with an edge of an image representing the plurality of closed regions obtained as a result of the first region division.
(10) In the measuring device as recited in any one of the aforementioned Items 1 to 6, the calculating means performs second region division for acquiring coordinate information of a protrusion and a recess of the measurement object by performing Otsu's binarization on the surface profile distribution before the calculation of the surface evaluation index.
(11) In the measuring device as recited in any one of the aforementioned Items 1 to 10, before the calculation of the surface evaluation index, the calculating means performs first region division for dividing the surface profile distribution into a plurality of closed regions according to a height of the surface profile distribution by using a watershed segmentation method, and second region division for acquiring coordinate information of a protrusion and a recess of the measurement object by performing Otsu's binarization on the surface profile distribution, and calculates the surface evaluation index using one or more of an image obtained as a result of the first region division, an image obtained as a result of the second region division, the surface profile distribution, and the two-dimensional luminance distribution.
(12) In the measuring device as recited in any one of the abovementioned Items 7 to 9, the surface evaluation index is represented by the number of closed regions in an image obtained by the first region division.
(13) In the measuring device as recited in any one of the abovementioned Items 7 to 9, the surface evaluation index is represented by an average of areas of the closed regions in an image obtained by the first region division.
(14) In the measuring device as recited in any one of the abovementioned Items 7 to 9, the surface evaluation index is represented by an average value of heights in a same coordinate set in the surface profile distribution, the average value being obtained from coordinate information representing the closed regions in an image obtained by the first region division.
(15) In the measuring device as recited in any one of the abovementioned Items 1 to 6, before the calculation of the surface evaluation index, the calculating means performs first region division for dividing the surface profile distribution into a plurality of closed regions by using a watershed segmentation method according to a height of the surface profile distribution, and second region division for acquiring coordinate information of a protrusion and a recess of the measurement object by performing Otsu's binarization on the surface profile distribution, and the surface evaluation index is represented by an average area of a same coordinate set in closed regions, the average area being obtained from the plurality of closed regions in an image obtained by the first region division and coordinate information representing the protrusion or the recess obtained by the second region division.
(16) In the measuring device as recited in the abovementioned Item 10 or 11, the surface evaluation index is represented by an average value of luminance in a coordinate set in the two-dimensional luminance distribution, the average value being obtained from a coordinate set representing the protrusion and the recess obtained by the second region division.
(17) In the measuring device as recited in the aforementioned Item 10 or 11, the surface evaluation index is obtained by calculating a contrast of an index value calculated for each of the protrusion and the recess obtained by the second region division.
(18) In the measuring device as recited in aforementioned Item 10 or 11, the surface evaluation index includes an index obtained by determining, from a coordinate set representing the protrusion or the recess obtained by the second region division, an average value of absolute values of deviations from a reference plane in a same coordinate set in the surface profile distribution or in the two-dimensional luminance distribution.
(19) In the measuring device as recited in aforementioned Item 10 or 11, the surface evaluation index includes an index obtained by determining, from a coordinate set representing the protrusion or the recess obtained by the second region division, a square root of an average value of squares of deviations from a reference plane in a same coordinate set in the surface profile distribution or in the two-dimensional luminance distribution.
(20) In the measuring device as recited in the abovementioned Item 10 or 11, the surface evaluation index is represented by an average value of wavelength components included in a coordinate set in the surface profile distribution, the average value being obtained from a coordinate set representing the protrusion or the recess obtained by the second region division.
(21) In the measuring device as recited in aforementioned Item 10 or 11, the surface evaluation index is obtained by determining, from a coordinate set representing the protrusion or the recess obtained by the second region division, a square root of an average value of squares of deviations from a reference plane in a horizontal direction or a vertical direction in the surface profile distribution in a same coordinate set in the surface profile distribution or in the two-dimensional luminance distribution.
(22) In the measuring device as recited in the aforementioned Item 10 or 11, the surface evaluation index is represented by an average value of a radius of curvature of the protrusion, the average value being obtained from a coordinate set representing the protrusion obtained by the second region division.
(23) In the measuring device as recited in any one of the aforementioned Items 1 to 22, the surface evaluation index represents directionality of a streak surface of unevenness in the surface profile distribution.
(24) In the measuring device as recited in 10 or 11, the surface evaluation index is represented by an average value of local gradients in a coordinate set in the surface profile distribution, the average value being obtained from a coordinate set representing the protrusion obtained by the second region division.
(25) A method of calculating a surface evaluation index includes performing profile distribution measurement to cause the profile distribution acquiring means of the measuring device as recited in any one of the aforementioned Items 1 to 24 to acquire a surface profile distribution of the measurement object based on an electrical signal obtained by the two-dimensional photoelectric conversion means, performing luminance distribution measurement to cause the luminance distribution acquiring means to acquire a two-dimensional luminance distribution of the measurement object based on the electrical signal obtained by the two-dimensional photoelectric conversion means, and causing the calculating means to calculate a surface evaluation index of the measurement object using at least one of the surface profile distribution of the measurement object acquired in the profile distribution measurement and the two-dimensional luminance distribution of the measurement object acquired in the luminance distribution measurement.
(26) A program for causing a computer to execute acquiring a surface profile distribution of a measurement object based on an electrical signal obtained by a two-dimensional photoelectric conversion means disposed at a position where the two-dimensional photoelectric conversion means can receive light specularly reflected from the measurement object out of illumination light emitted from a single illuminating means to the measurement object, acquiring a two-dimensional luminance distribution of the measurement object based on the electrical signal obtained by the two-dimensional photoelectric conversion means, and calculating a surface evaluation index of the measurement object using at least one of the acquired surface profile distribution and the acquired two-dimensional luminance distribution of the measurement obj ect.

### Advantageous Effects of Invention

According to the measuring device and the method of calculating a surface evaluation index according to the present invention, the two-dimensional conversion element is disposed at a position where the two-dimensional conversion element can receive light specularly reflected from the measurement object out of illumination light emitted from the illuminating means to the measurement object. Therefore, even in a case where the light specularly reflected from the measurement object is significantly different in intensity from light diffusely reflected from the measurement object, dynamic range securing processing on a two-dimensional photoelectric conversion section side is not necessary, and thus a high SN ratio can be maintained and a highly accurate surface evaluation index can be obtained. Moreover, the surface profile distribution can be acquired by the single illuminating means. Therefore, no illuminance variation occurs in the measurement object, the surface profile distribution can be acquired stably, and it can be expected to ensure the reproducibility of the calculated index.

Further, according to the program of the present invention, the following steps can be executed by a computer. A step of acquiring a surface profile distribution of a measurement object based on an electrical signal obtained by a two-dimensional photoelectric conversion means disposed at a position where the two-dimensional photoelectric conversion means can receive light specularly reflected from the measurement object out of illumination light emitted from a single illuminating means to the measurement object. A step of acquiring a two-dimensional luminance distribution of the measurement object based on the electrical signal obtained by the-two-dimensional photoelectric conversion means. A step of calculating a surface evaluation index of the measurement object using at least one of the acquired surface profile distribution and the acquired two-dimensional luminance distribution.

### Brief Description of Drawings

Fig. 1 is a block diagram illustrating a configuration of a measuring device according to an embodiment of the present invention.
Fig. 2 is a perspective view illustrating the exterior of the measuring device.
Fig. 3 is a diagram for explaining a flow up to calculation of a surface evaluation index using at least one of a surface profile distribution and a two-dimensional luminance distribution of a measurement object.
Fig. 4 is a diagram illustrating an image in which lines are drawn on the surface profile distribution to divide the distribution into cells.
Fig. 5 is a diagram for explaining a watershed segmentation method.
Fig. 6 is a diagram for explaining a surface evaluation index 2.
Fig. 7 is a diagram for explaining surface evaluation indices 5 and 6.
Fig. 8 is a diagram for explaining surface evaluation indices 7 to 9.
Figs. 9A and 9B are explanatory diagrams related to surface evaluation indices 10 to 13.
Figs. 10A and 10B are explanatory diagrams related to surface evaluation indices 14 to 17.
Fig. 11 is a diagram for explaining a surface evaluation index 18.
Fig. 12 is an explanatory diagram relating to surface evaluation indices 20 to 23.
Fig. 13 is an explanatory diagram relating to the surface evaluation indices 20 to 23.
Fig. 14 is a diagram for explaining a surface evaluation index 28.
Fig. 15 is a diagram for explaining a surface evaluation index 29.
Fig. 16 is a diagram for explaining a problem in a case where H-V segmentation is performed by binarization.
Figs. 17A and 17B are schematic diagrams in a case where H-V segmentation is performed by ternarization or more, Fig. 17A is a diagram illustrating a draft angle in a case where a textured part is extracted from a mold, and Fig. 17B is a diagram illustrating a state of a change from a protrusion to a recess.
Fig. 18 is an explanatory diagram of expansion processing and contraction processing in a case where opening processing is performed as noise processing in H-V segmentation.
Fig. 19 is an explanatory diagram of Voronoi tessellation.
Fig. 20 is a diagram for explaining post-processing for deleting surrounding cells in cell-segmentation.
Fig. 21 is an explanatory diagram of a case where the surface profile distribution is subjected to blurring filter processing in order to improve the accuracy of segmentation.
Fig. 22 is an explanatory diagram of application of wolf pruning in a case where watershed segmentation is used as cell-segmentation.

### Description of Embodiments

Hereinafter, embodiments of the present invention will be described with reference to the drawings.

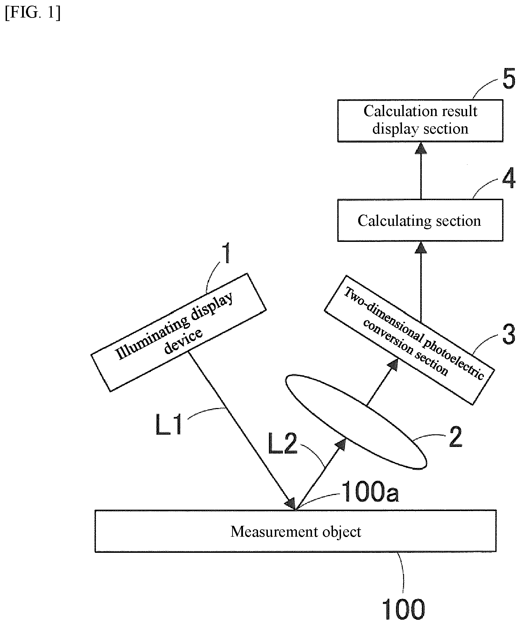

Fig. 1 is a block diagram illustrating a configuration of a measuring device according to an embodiment of the present invention.

The measuring device illustrated in Fig. 1 includes a single illuminating display device 1, an objective lens 2, a two-dimensional photoelectric conversion section 3 that is a two-dimensional imaging element including a CCD sensor or the like, a calculating section 4, and a calculation result display section 5 including a liquid crystal display device or the like.

The illuminating display device 1 displays pattern illumination. Furthermore, illumination light L1 is emitted from the displayed pattern illumination to a measurement site 100a of the measurement object (also referred to simply as a sample) 100.

The two-dimensional photoelectric conversion section 3 includes a large number of pixels, receives light L2 reflected from the sample 100 for each pixel through the objective lens 2, converts the received light into image data, and outputs the image data.

In the present embodiment, the illuminating display device 1 and the two-dimensional photoelectric conversion section 3 are arranged in a positional relationship in which the two-dimensional photoelectric conversion section 3 can receive reflected light of a specularly reflected component that is specular reflection on a front surface of the measurement site 100a. In other words, an angle between a normal to the measurement site 100a of the sample 100 and a normal to the illuminating display device 1 and an angle between the normal to the measurement site 100a of the sample 100 and the two-dimensional photoelectric conversion section 3 are substantially the same. Further, it is desirable that the front surface (sample face) of the measurement site 100a of the sample 100 and the two-dimensional photoelectric conversion section 3 have a conjugate relationship.

The image data, which is an electrical signal output from the two-dimensional photoelectric conversion section 3, is converted into a digital signal via an IV conversion circuit and an AD conversion circuit (not illustrated) as necessary, and is transmitted to the calculating section 4. The conversion of the image data output from the two-dimensional photoelectric conversion section 3 into the digital signal may be performed by the calculating section 4.

The calculating section 4 acquires a surface profile distribution and a two-dimensional luminance distribution of the sample 100 by a CPU or the like using the transmitted image data. A method for the acquisition will be described later. The calculating section 4 further calculates a surface evaluation index (hereinafter referred to simply as an index) of the sample 100 using one or both of the acquired surface profile distribution and two-dimensional luminance distribution of the sample 100.

The calculating section 4 may be a dedicated device or may be constituted by a personal computer. The image data output from the two-dimensional photoelectric conversion section 3 and processed into the digital signal may be transmitted to the calculating section 4 via a network. In this case, the calculation of the index can be performed even when the calculating section 4 is present at a location away from a measurement location.

Further, in a case where the measurement object is an automobile interior component, it is considered that the size of a small grain of a molded product by surface texturing is about less than 200 µm and the size of a large grain of the molded product is about 2000 µm in a general shape. It is more desirable that the measuring device can spatially distinguish a protrusion and a recess obtained by surface texturing.

As described above, a spatial resolution of the two-dimensional photoelectric conversion section 3 is desirably 100 µm or less in consideration of the Nyquist theorem.

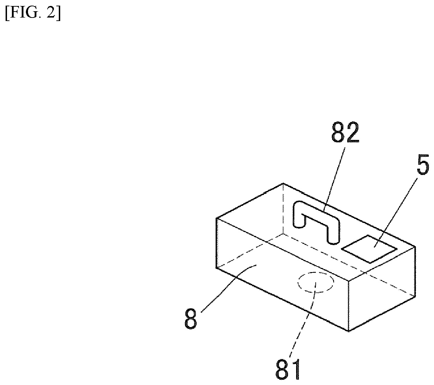

Fig. 2 is a perspective view illustrating the exterior of the measuring device according to the embodiment of the present invention. In the present embodiment, the measuring device is configured as a portable handy type.

Specifically, the illuminating display device 1, the objective lens 2, the two-dimensional photoelectric conversion section 3, and the calculating section 4 are accommodated in a housing 8. In addition, on an upper surface of the housing 8, a grip portion 82 for carrying is provided and the calculation result display section 5 that displays a calculation result is provided. Further, an opening 81 for irradiating the measurement site 100a of the sample 100 with illumination light and taking reflected light from the measurement site in the housing 8 is formed in a lower surface of the housing 8.

When the measuring device illustrated in Fig. 2 is used, the grip portion 82 is gripped and the opening 81 in the lower surface is positioned at the measurement site 100a of the sample 100. In this state, the sample 100 is irradiated with illumination light from the illuminating display device 1 housed in the housing 8. The reflected light is received by the two-dimensional photoelectric conversion section 3, and the surface profile distribution and the two-dimensional luminance distribution are acquired by the calculating section 5 using the image data output from the two-dimensional photoelectric conversion section 3. Further, the index is calculated using at least one of these distributions, and the calculation result is displayed on the calculation result display section 5.

According to the measuring device, by carrying the housing, the surface profile distribution and the two-dimensional luminance distribution can be acquired regardless of the location, and the index can be calculated. Instead of the handy type measuring device, a bench top type measuring device may be used.

### [Example 1]: Example of Image Processing Algorithm and Example of Calculation of Surface Evaluation Index

Next, a flow up to the calculation of the surface evaluation index using at least one of the surface profile distribution and the two-dimensional luminance distribution of the sample 100 will be described in the order of (1) an image processing algorithm and (2) indexing. However, it is assumed that the two-dimensional luminance distribution can be acquired under a certain exposure condition.

### (1) Image Processing Algorithm

Hereinafter, an image processing algorithm immediately before the calculation of the index representing a characteristic of the sample 100 using the surface profile distribution and the two-dimensional luminance distribution will be described.

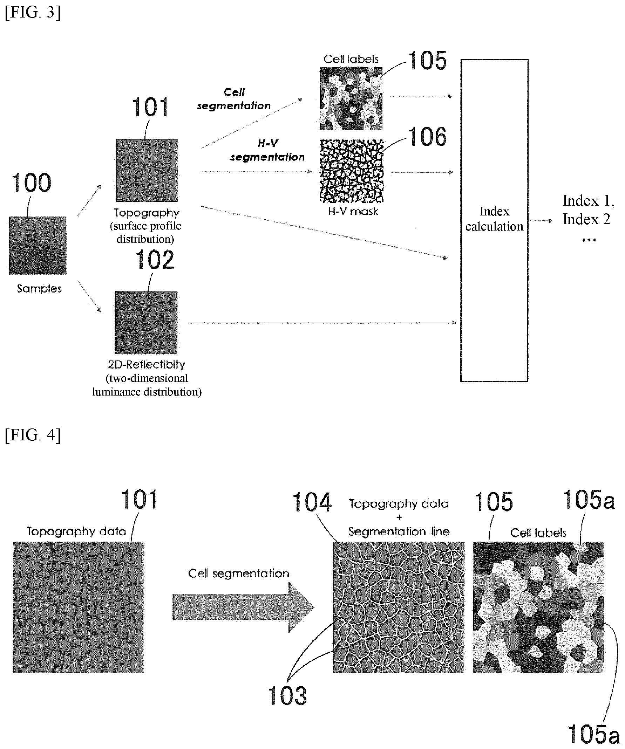

Fig. 3 illustrates a general flow of an entire process. It is assumed that two pieces of information that are a surface profile distribution 101 and a two-dimensional luminance distribution 102 of the sample 100 have already been held at the start time of the process.

First, cell-segmentation is performed on the surface profile distribution 101. This processing is processing in which noise reduction is performed on the surface profile distribution 101 and then the surface profile distribution 101 is "segmented", that is, divided into regions according to unevenness of the surface of the sample 100. This is implemented by connecting portions where values of the unevenness of the surface profile distribution 101 are locally small. Conceptually, as illustrated in an image 104 in Fig. 4, this operation corresponds to an operation of drawing a line 103 illustrated in white on the surface profile distribution 101 and assigning a label value to each divided region, like an image 105 (hereinafter, also referred to as cell-labels 105) divided for each cell. Here, each of the divided regions is called a cell 105a (also referred to as a cell).

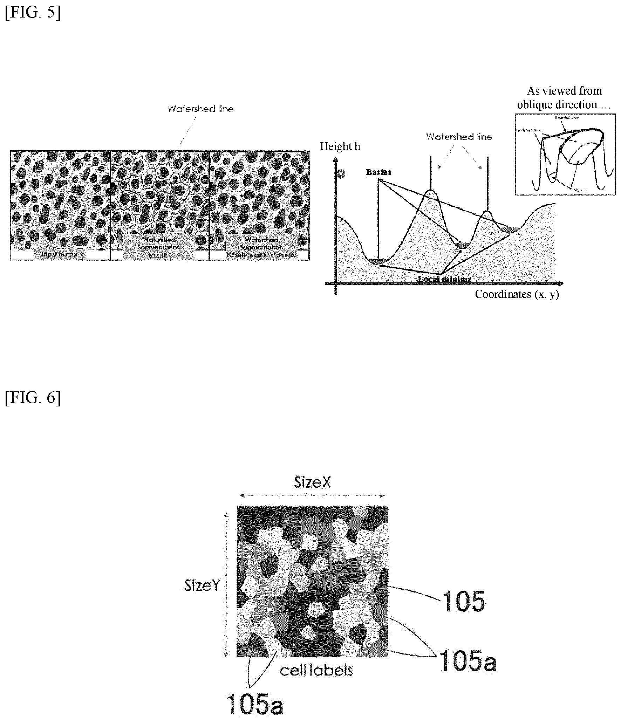

As illustrated in Fig. 5, this method can be implemented by using an algorithm called watershed segmentation or the like. In this algorithm, first, an input image is inverted, a distribution of the image is regarded as a hill and a valley, water is continuously caused to flow from above to a certain water level, and pixels at which different puddles meet each other at that time are used as dividing lines and boundary lines to form cells. Further, as for the water level, it is possible to cope with a case where an outlier is included in the surface profile distribution 101 or the like by appropriately adjusting the height at which water starts to be poured and ends to be poured. Examples of the noise reduction method include, but are not limited to, (1) application of a blur-filter and (2) wolf pruning.

Next, as indicated by reference numeral 106 in Fig. 3, H-V segmentation is performed on the surface profile distribution 101. This indicates a process of performing noise processing on the surface profile distribution 101 and a process of classifying heights of the surface profile distribution into two or more with a certain threshold. As a result, it is possible to acquire an image 106 (hereinafter, also referred to as an H-V mask 106) having information of a relatively high portion (hill) and a relatively low portion (valley) in the surface profile distribution 101. The threshold may be determined by a user himself or herself at the time of executing the H-V segmentation, or may be automatically calculated. As an example of the processing method, binarization processing according to Otsu's method which is a known method can be used. Examples of the noise processing method include, but are not limited to, a blur-filter, expansion/contraction processing, and the like before the execution of H-V segmentation.

An index representing a characteristic amount of the sample 100 is calculated by using at least one of these four pieces of information of the cell-labels 105, the H-V mask 106, the surface profile distribution 101, and the two-dimensional luminance distribution 102 obtained by the above-described processing.

### (2) Indexing

Here, a method of calculating an index of the sample 100 using at least one of the four pieces of information will be described.

### • Index 1 [unit: piece]

This index 1 is the number of cells 105a in the sizes of the surface profile distribution 101 and the two-dimensional luminance distribution 102. The index is used in a case where samples to be compared have the same size. It can be calculated by counting the number of types of label values assigned to the cells 105a.

### • Index 2 [unit: pieces/mm²]

As illustrated in Fig. 6, it represents the number of cells 105a per unit area. After the index 1 is calculated, a value that is not affected by the size of the surface profile distribution/the magnitude of two-dimensional gloss can be calculated by dividing the index 1 by the size SizeX × SizeY of the surface profile distribution 101.

### • Index 3 [units: mm²]

It represents an average of the areas of the cells 105a. It can be calculated by counting, for each cell 105a, the number of times that the same label value assigned to the cell-labels 105 appears and averaging them.

### • Index 4 [unit: µm]

It represents an average of the heights of the cells 105a. In a coordinate set corresponding to one cell 105a, the maximum and minimum values of the surface profile distribution 101 are extracted, and the difference between the values is calculated. It can be calculated by repeating this calculation for each of the cells 105a and averaging them.

### • Index 5 [units: mm²]

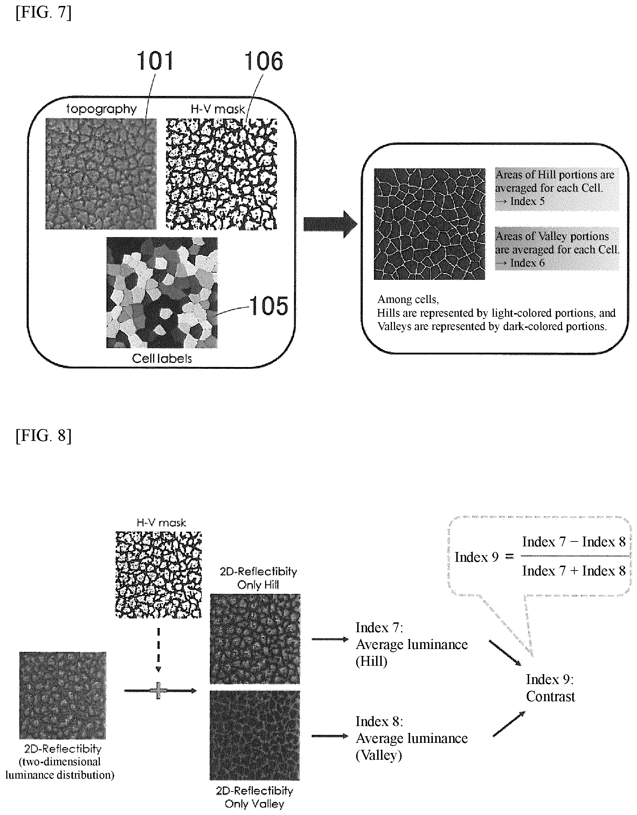

It is an average value of the areas of portions determined to be hills of the cells 105a. As an image, as illustrated in the right diagram in Fig. 7, it can be calculated by calculating the areas of the hills (light color portions) for each cell 105a and averaging them.

### • Index 6 [units: mm²]

It is an average value of the areas of valley portions of the cells 105a. As an image, as illustrated in the right diagram in Fig. 7, it can be calculated by calculating the areas of the valleys (dark color portions) for each cell 105a and averaging them.

### • Index 7

As illustrated in Fig. 8, it is an average value of luminance in relatively high portions (hills) in the height of the sample 100. It can be calculated from the Hadamard product of the two-dimensional luminance distribution 102 and the H-V mask 106.

### • Index 8

As illustrated in Fig. 8, it is an average value of luminance in relatively low portions (valleys) in the height of the sample 100. It can be calculated from the Hadamard product of the two-dimensional luminance distribution 102 and an image obtained by inverting the H-V mask 106.

### • Index 9

As illustrated in Fig. 8, it is calculated by calculating the contrast of the index 7 and the index 8.

### • Index 10: Sa_TopoHill [unit: µm]

It represents average "roughness" of a hill region in the surface profile distribution 101. It can be calculated by averaging absolute values of deviations of the height of the surface profile distribution 101 with respect to a reference plane for the hill region.

### • Index 11: Sa_TopoValley [unit: µm]

It represents average "roughness" of a valley region in the surface profile distribution. It can be calculated by averaging absolute values of deviations of the height of the surface profile distribution with respect to a reference plane for the valley region.

### • Index 12: Sa_RefHill [unit: µm]

It represents a value obtained by averaging absolute values of deviations with respect to a reference plane for a hill region in the two-dimensional luminance distribution 101.

### • Index 13: Sa_RefValley [unit: µm]

It represents a value obtained by averaging absolute values of deviations with respect to a reference plane for a valley region in the two-dimensional luminance distribution 101.

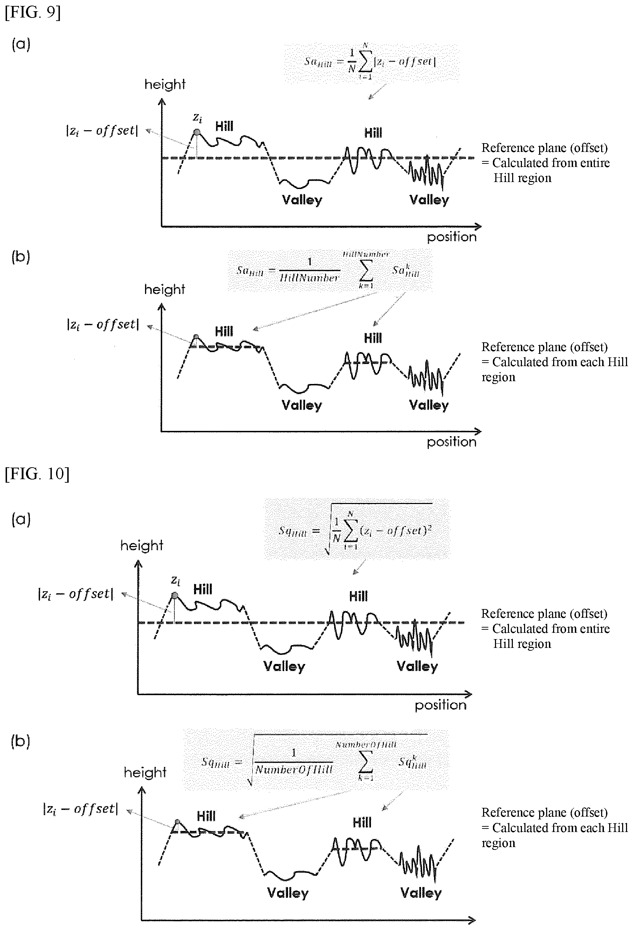

However, regarding the indices 10 and 12, there are the following two calculation methods depending on how the reference planes are taken.
(a) A method of setting a reference plane using an entire hill region and calculating an index using a deviation from the reference plane (see Fig. 9A)
(b) A method of setting a reference plane unique to each hill region, calculating an index for each region, and averaging the indices (see Fig. 9B)

At the stage of H-V segmentation, the method (a) and the method (b) may be switched based on whether or not the respective hills are collectively handled. When the method (a) is compared with the method (b), it can be expected that the calculation can be performed with higher accuracy in the method (b) because each hill is uniquely handled.

Also in the case of the valleys of the indices 11 and 13, the reference planes may be set using the entire valley regions, similarly to the case of the hills illustrated in Figs. 9A and 9B. Alternatively, a unique reference plane may be set for each of the valley regions.

### • Index 14: Sq_TopoHill [unit: µm]

It represents average "roughness" of the hill region in the surface profile distribution 101. It can be calculated by taking the square root of the mean square of deviations of the height of the surface profile distribution with respect to the reference plane for the hill region.

### • Index 15: Sq_TopoValley [unit: µm]

It represents average "roughness" of the valley region in the surface profile distribution. It can be calculated by taking the square root of the mean square of deviations of the height of the surface profile distribution with respect to the reference plane for the valley region.

### • Index 16: Sq_RefHill [unit: µm]

It represents average "roughness" of the hill region in the two-dimensional luminance distribution. It can be calculated by taking the square root of the mean square of deviations of the height of the surface profile distribution with respect to the reference plane for the hill region.

### • Index 17: Sq_ReNalley [unit: µm]

It represents average "roughness" of the valley region in the two-dimensional luminance distribution. It can be calculated by taking the square root of the mean square of deviations of the height of the surface profile distribution with respect to the reference plane for the valley region.

However, regarding the indices 14 and 16, there are the following two calculation methods depending on how the reference surfaces are taken.
(a) A method of setting a reference plane using an entire hill region and calculating an index using a deviation from the reference plane (see Fig. 10A)
(b) A method of setting a reference plane unique to each hill region, calculating an index for each region, and averaging the indices (see Fig. 10b)

At the stage of H-V segmentation, the method (a) and the method (b) may be switched based on whether or not the respective hills are collectively handled. When the method (a) is compared with the method (b), it can be expected that the calculation can be performed with higher accuracy in the method (b) because each hill is uniquely handled.

Also in the case of the valleys of the indices 15 and 17, the reference planes may be set using the entire valley regions, similarly to the case of the hills illustrated in Figs. 10A and 10b. Alternatively, a unique reference plane may be set for each of the valley regions.

### • Index 18: RsM TopoHill [unit: mm]

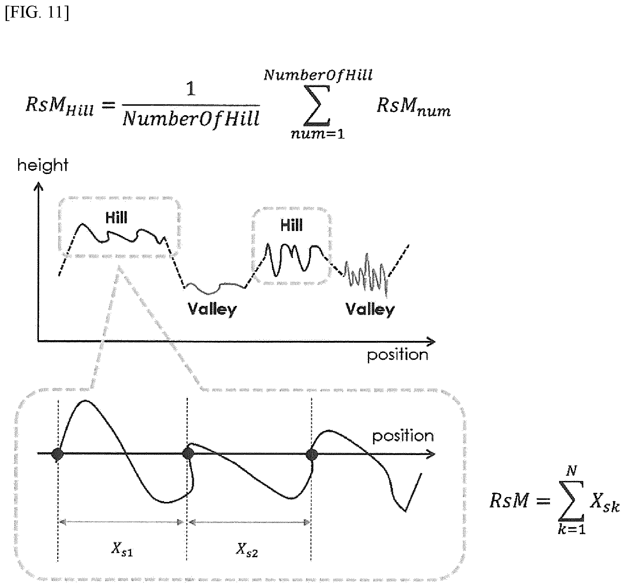

As illustrated in Fig. 11, it represents an average interval between hill portions in the surface profile distribution 101. For a certain hill, the number of intersections between the reference plane and the surface profile distribution 101 is counted, and every time the number of counts reaches an even number, the intersections are averaged as one interval. It can be calculated by repeating this for all the hills and averaging the results. The same applies to an index 19 for a valley described below.

### • Index 19: RsM TopoValley [unit: mm]

It represents an average interval between valley portions in the surface profile distribution 101. For a certain valley, the number of intersections between the reference plane and the surface profile distribution 101 is counted, and every time the number of counts reaches an even number, the intersections are averaged as one interval. It can be calculated by repeating this for all the valleys and averaging the results.

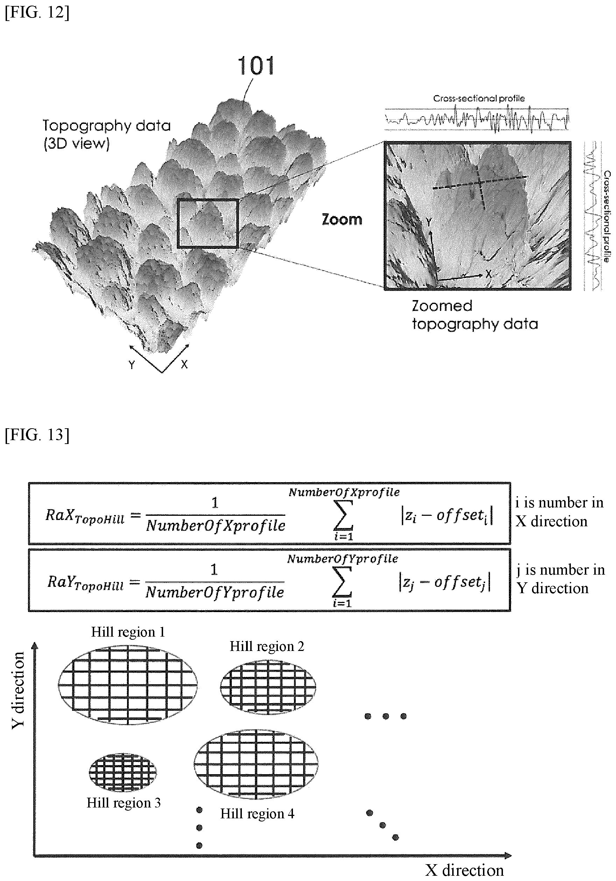

Furthermore, the following four indices 20 to 23 are indices calculated in each of the X and Y directions illustrated in Fig. 12. With these indices, the directionality of the roughness in the hill and valley regions in the surface profile distribution 101 can be quantified.

### • Index 20: RaX_TopoHill [unit: µm]

It represents "roughness" of a hill portion in the X direction in the surface profile distribution 101. As illustrated in the lower diagram in Fig. 13, when hill portions (regions 1, 2, 3, 4, ···) in the surface profile distribution 101 are present, it is calculated by an equation for obtaining RaX TopoHill in Fig. 13.

### • Index 21: RaY_TopoHill [unit: µm]

It represents "roughness" of a hill portion in the Y direction in the surface profile distribution 101. As illustrated in the lower diagram in Fig. 13, when hill portions (the regions 1, 2, 3, 4, ···) in the surface profile distribution 101 are present, it is calculated by an equation for obtaining RaY TopoHill in Fig. 13.

### • Index 22: RaX_TopoValley [unit: µm]

It represents "roughness" of a valley portion in the X direction in the surface profile distribution 101. By replacing the hill portions in Fig. 13 with valley portions, it can be obtained similarly.

### • Index 23: RaY_TopoValley [unit: µm]

It represents "roughness" of a valley portion in the Y direction in the surface profile distribution 101. By replacing the hill portions in Fig. 13 with valley portions, it can be obtained similarly.

### • Index 24: RaX_RefHill [unit: µm]

It represents "roughness" of a hill portion in the X direction in the two-dimensional luminance distribution 102. By replacing the hill portions in Fig. 13 with hill portions in the two-dimensional luminance distribution 102, a calculation similar to that in Fig. 13 may be performed.

### • Index 25: RaY_RefHill [unit: µm]

It represents "roughness" of a hill portion in the Y direction in the two-dimensional luminance distribution 102. By replacing the hill portions in Fig. 13 with hill portions in the two-dimensional luminance distribution 102, a calculation similar to that in Fig. 13 may be performed.

### • Index 26: RaX TopoValley [unit: µm]

It represents "roughness" of a valley portion in the X direction in the two-dimensional luminance distribution 102. By replacing the hill portions in Fig. 13 with valley portions in the two-dimensional luminance distribution 102, a calculation similar to that in Fig. 13 may be performed.

### • Index 27: RaY TopoValley [unit: µm]

It represents "roughness" of a valley portion in the Y direction in the two-dimensional luminance distribution 102. By replacing the hill portions in Fig. 13 with valley portions in the two-dimensional luminance distribution 102, a calculation similar to that in Fig. 13 may be performed.

### • Index 28: Spchill [unit: mm⁻¹]

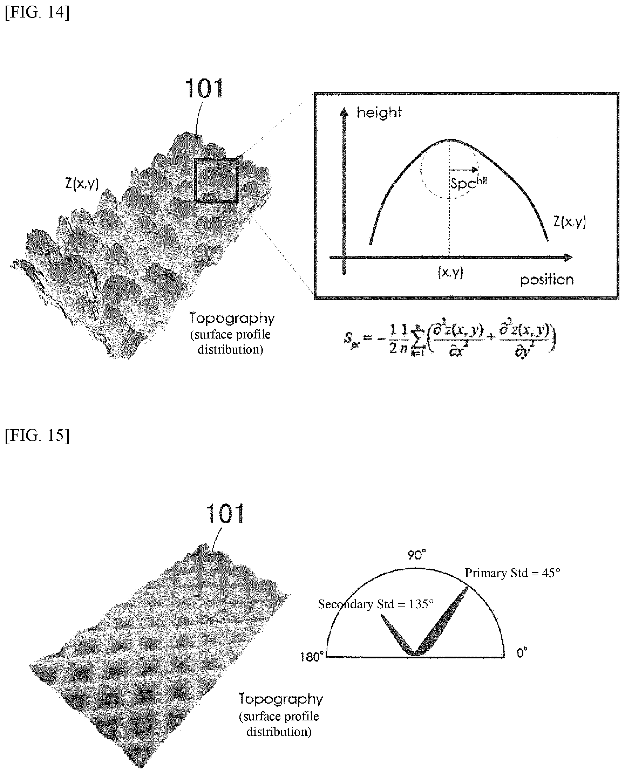

As illustrated in Fig. 14, it represents an average value of the curvatures of the hill portions in the surface profile distribution 101. A larger value indicates a sharper shape. At the coordinates of the top of each hill, the curvature of the surface profile distribution is calculated from its neighboring pixels according to an equation for S_{pc} in Fig. 14.

### • Index 29: Std [unit: °]

It is an index representing the directionality and its angle in the surface profile distribution 101, and representing the directionality of a streak surface of unevenness in the surface profile distribution 101. As illustrated in Fig. 15, the intensity of directionality at a certain angle can be obtained by integrating a spatial frequency distribution of the surface profile distribution 101 in a radial direction from the origin. The Std parameter represents the angles of peaks in descending order in a direction plot.

### • Index 30: Sdq [unit: µm/mm]

It is an average value of local gradients of the curvatures of the hill portions in the surface profile distribution 101. The larger this value is, the finer the texture is. It can be calculated by performing a differential operation for each hill of the surface profile distribution 101 and averaging the results.

### (3) Methods of Acquiring Surface Profile Distribution and Two-dimensional Luminance Distribution

First, a method of acquiring the surface profile distribution will be described. This method is a known method generally called "phase measuring deflectmetry (PMD)". A plurality of sinusoidal wave patterns having different phases are displayed on the illuminating display device 1 in a time-division manner, the reflected light is received by the two-dimensional photoelectric conversion section 3, and the result of receiving the light is recorded. The reflected light includes inclination (curvature) information of the sample 100. Therefore, it is possible to perform conversion into height information by performing spatial integration calculation on the sample surface using a plurality of received reflected light distributions.

Next, a method of acquiring the two-dimensional luminance distribution will be described. A pattern (all-white image) in which all pixel values have a constant value is displayed on the illuminating display device 1, the reflected light is received by the two-dimensional photoelectric conversion section 3, and the result of receiving the light is recorded.

In this way, the surface profile distribution and the two-dimensional luminance distribution of the sample 100 can be acquired. However, since the light amount adjustment of the illuminating display device 1 is performed before recording so that both of the distributions do not exceed a dynamic range of recordable luminance of the two-dimensional photoelectric conversion section 3, it can be expected that a highly accurate value is calculated in the index calculation.

As described above, as a characteristic of the index calculated according to the present embodiment, the two-dimensional photoelectric conversion section 3 receives the specularly reflected light of the illumination light emitted from the illuminating display device 1, and the surface profile distribution 101 and the two-dimensional luminance distribution 102 are acquired from the electrical signal obtained by the two-dimensional photoelectric conversion section 3. By calculating the index using at least one of the surface profile distribution 101 and the two-dimensional luminance distribution 102, the following effects can be expected.
(1) Even in a case where the light specularly reflected from the sample 100 is significantly different in intensity from the light diffusely reflected from the sample 100, both the surface profile distribution 101 and the two-dimensional luminance distribution 102 are acquired based on the reception of the specularly reflected light. Therefore, the dynamic range securing processing on the side of the two-dimensional photoelectric conversion section 3 is unnecessary, and therefore, a high SN can be maintained, making it possible to calculate the index with high accuracy.
(2) Since the surface profile distribution 101 can be acquired by the illuminating display device 1 which is a single light source, the illuminance variation on the measurement object does not occur, and the surface profile distribution can be stably acquired. Therefore, it is expected to ensure the reproducibility of the calculated index. If the accuracy of the surface profile distribution is low, the height information cannot be accurately reflected in the index.
(3) Since the illuminating display device 1 is a single light source and an illumination system including the light source is shared as compared with Patent Literature 2, the exposure adjustment may be performed at least once, and the calculation of the index is efficient.

As described above, in the present embodiment, it is possible to calculate the index with high accuracy and simply as compared with the related art.

### [Example 2]: H-V segmentation Method

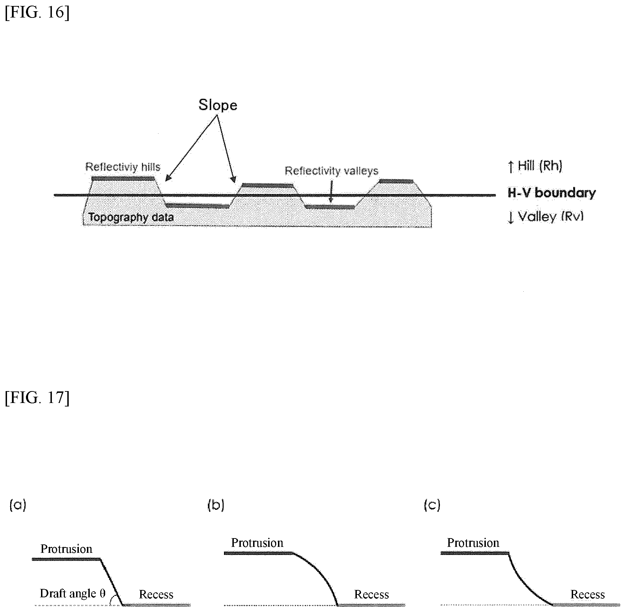

As the H-V segmentation, a method of setting two or more thresholds to adopt ternarization or quaternarization is also considered. In the case of the binarization, as illustrated in Fig. 16, there is a high possibility that a region that is not originally a hill, for example, a slope portion between a hill and a valley is also included in the calculation at the time of the index calculation. Therefore, it is conceivable that assigning three or more types of values such as "else" meaning other regions in addition to the "hills" and the "valleys" to the surface profile distribution 101 will lead to a result closer to visual inspection for an index relating to two-dimensional gloss.

In addition, by calculating and analyzing the "else" regions, it is possible to acquire information regarding a region of a boundary between an actual protrusion and an actual recess subjected to surface texturing in the surface profile distribution 101. A draft angle when a textured part is removed from the mold (see Fig. 17A) and a state of a change from the protrusion to the recess (see Figs. 17B and 17C) can be known.

### [Example 3]: Noise Processing Method 1 in H-V Segmentation

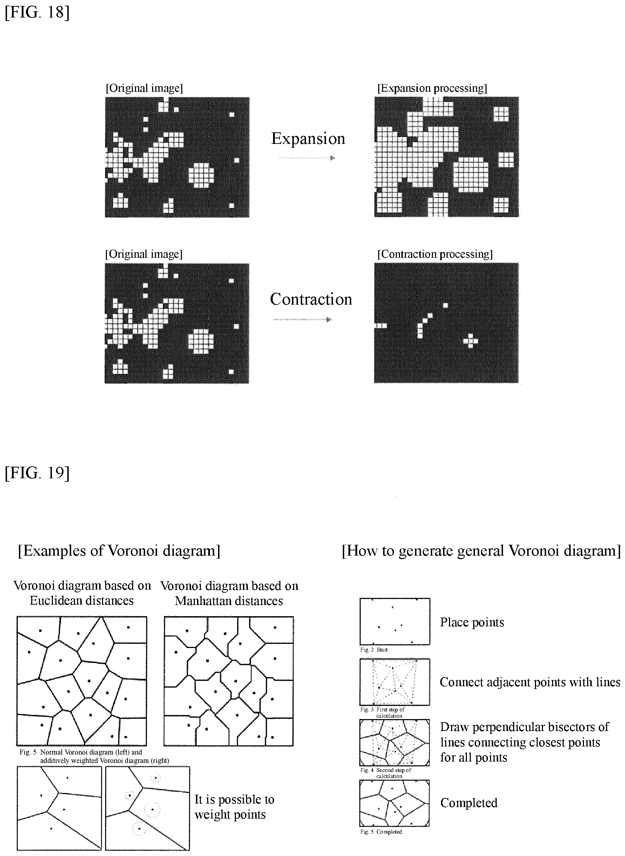

Opening is effective as noise processing in H-V segmentation. This processing is processing for dividing a region by performing processing such as processing from contraction, to contraction, to expansion, to expansion, and so on. As illustrated in the upper part of Fig. 18, the expansion refers to processing of expanding a binarized region by one round and one more round. By performing the expansion, adjacent portions can be connected. As illustrated in the lower part of Fig. 18, the contraction refers to processing of contracting a binarized region by one round and one more round. It is possible to erase a binarized region of about one pixel, or to separate a portion unintentionally extracted together. Thus, it is possible to remove a small pattern or a thin pattern. This is effective in a case where the surface profile distribution 101 before the H-V mask 106 is created has high-frequency noise (chip, dust, dirt, scratch, or the like).

### [Example 4]: Noise Processing Method 2 in H-V Segmentation

In a case where high-frequency noise is superimposed on the surface profile distribution 101 itself, the noise processing method in Example 3 described above may be used, but blur-filtering using a Gaussian kernel or the like is also effective.

### [Example 5]: Method 1 of Implementing Cell-Segmentation

As a method of implementing cell-segmentation, it can also be implemented by searching for local minimum values (minimal value) in the surface profile distribution and connecting them.

### [Example 6]: Method 2 of Implementing Cell-Segmentation

It can be implemented by using a Voronoi tessellation. As illustrated in Fig. 19, the Voronoi tessellation refers to a diagram in which a plurality of points arranged at arbitrary positions in a certain space are divided into regions based on which point each of the points is closest to. The division pattern depends only on the positions of the points before the division (it is possible to weight the points).

In the surface profile distribution 101, a point is placed at a position where unevenness is locally maximized to obtain the cell-labels 105.

### [Example 7]: Post-Processing of Cell-Segmentation (Dealing with Problem of Lack of Cell 105a at Image Edge Portion)

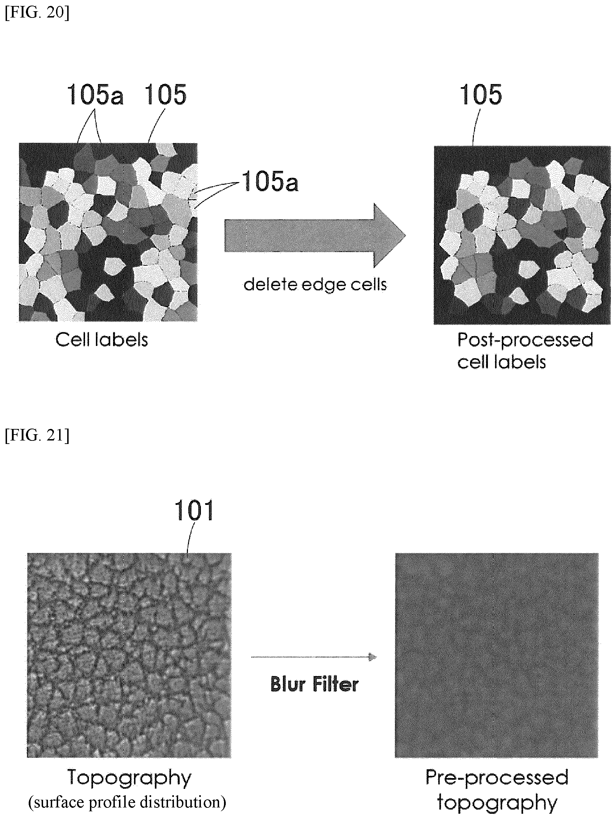

In the cell-labels 105 obtained by cell-segmentation, each cell 105a ends up being broken at an edge portion of an image as illustrated in the left diagram of Fig. 20, and therefore the accuracy of an index value to be calculated ends up differing from the actual accuracy. Therefore, as illustrated in the right diagram of Fig. 20, this problem can be addressed by adding post-processing for deleting a surrounding cell 105a. An image obtained as a result may be treated as new cell-labels 105 and an index value may be calculated.

### [Example 8]: Noise Processing 1 Before Cell-Segmentation

In order to improve the accuracy of segmentation, the surface profile distribution 101 in the left diagram of Fig. 21 is caused to pass through a blur-filter using a Gaussian Kernel or the like, and high-frequency noise is removed as illustrated in the right diagram of Fig. 21, whereby improvement of the accuracy of segmentation can be expected. For example, when watershed segmentation is adopted as cell -segmentation, a problem of over segmentation may occur due to high-frequency noise. Since the accuracy of segmentation is directly related to the accuracy of an index, this processing may be performed as necessary.

### [Example 9]: Noise Processing 2 Before Cell-Segmentation

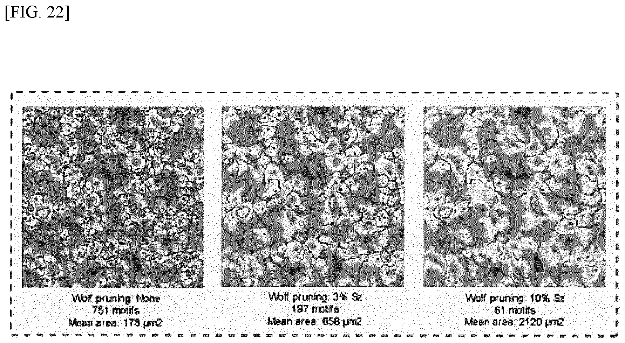

In a case where watershed-segmentation is used as cell-segmentation, "wolf pruning" may be used to prevent the over segmentation. In this method, a process of removing a hill region having a height and a valley region having a depth equal to or less than a certain threshold from the surface profile distribution is performed. For example, the threshold may be given as a ratio to the maximum height (Sz) of the surface profile distribution. The left diagram in Fig. 22 illustrates the surface profile distribution when the "wolf pruning" is not performed. The middle diagram illustrates the surface profile distribution when "wolf pruning 5% Sz" was performed. The right diagram illustrates the surface profile distribution when "wolf pruning 10% Sz" was performed.

### [Example 10]: Index Calculation in Case Where Exposure Condition is Not Constant

The values of the indices 7 and 8 vary according to an exposure condition under which the two-dimensional luminance distribution 102 is acquired. In a case where a certain exposure condition cannot be secured, stable index calculation can be performed by dividing the index value by the exposure time after calculation based on the above definition.

Depending on the sample 100, the amount of the specularly reflected light is relatively low with respect to the diffusely reflected light. In this case, it is necessary to increase an exposure amount (exposure time) in order to improve the SN, but since the reflection characteristics change when the sample 100 changes, it is not possible to compare the present indices under the same conditions. This influence can be canceled by dividing by the exposure time. Further, even when the exposure amount is low and the SN is low for some reason, the influence can be similarly suppressed.

The one embodiment of the present invention has been described above, but the present invention is not limited to the above-described embodiment. For example, the case where the surface of the measurement object 100 is subjected to surface texturing has been described, but other processing may be performed or the surface processing may not be performed.

This application claims the benefit of Japanese Patent Application No. 2021-106980, filed Jun. 28, 2021, the disclosure of which is incorporated herein by reference in its entirety.

### Industrial Applicability

The present invention can be used, for example, in a case where an evaluation index of a surface of an automobile interior component subjected to surface texturing is obtained.

### Reference Signs List

- 1: illuminating display device
- 2: objective lens
- 3: two-dimensional photoelectric conversion section
- 4: calculating section
- 5: calculation result display section
- 100: measurement object (sample)
- 100a: measurement site
- 101: surface profile distribution
- 102: two-dimensional luminance distribution
- 103: line
- 104: image with line
- 105: image segmented for each cell
- 105a: cell
- 106: image with hill and valley information in the surface profile distribution

## Claims

1. A measuring device comprising:
a single illuminating means capable of irradiating a measurement object with illumination light;
a two-dimensional photoelectric conversion means disposed at a position where the two-dimensional photoelectric conversion means can receive light specularly reflected from the measurement object out of the illumination light emitted from the illuminating means to the measurement object;
a profile distribution acquiring means that acquires a surface profile distribution of the measurement object based on an electrical signal obtained by the two-dimensional photoelectric conversion means;
a luminance distribution acquiring means that acquires a two-dimensional luminance distribution of the measurement object based on the electrical signal obtained by the two-dimensional photoelectric conversion means; and
a calculating means that calculates a surface evaluation index of the measurement object using at least one of the surface profile distribution of the measurement object acquired by the profile distribution acquiring means and the two-dimensional luminance distribution of the measurement object acquired by the luminance distribution acquiring means.

2. A measuring device comprising:
a profile distribution acquiring means that acquires a surface profile distribution of a measurement object based on an electrical signal obtained by a two-dimensional photoelectric conversion means disposed at a position where the two-dimensional photoelectric conversion means can receive light specularly reflected from the measurement object out of illumination light emitted from a single illuminating means to the measurement object;
a luminance distribution acquiring means that acquires a two-dimensional luminance distribution of the measurement object based on the electrical signal obtained by the two-dimensional photoelectric conversion means; and
a calculating means that calculates a surface evaluation index of the measurement object using at least one of the surface profile distribution of the measurement object acquired by the profile distribution acquiring means and the two-dimensional luminance distribution of the measurement object acquired by the luminance distribution acquiring means.

3. The measuring device according to claim 1 or 2, wherein the profile distribution acquiring means acquires the surface profile distribution of the measurement object by calculation based on an electrical signal obtained by the two-dimensional photoelectric conversion means when light specularly reflected from the measurement object when the measurement object is irradiated with illumination light having a plurality of sinusoidal wave patterns with different phases by the illuminating means in a time-division manner is received by the two-dimensional photoelectric conversion means.

4. The measuring device according to claim 1 or 2, wherein the luminance distribution acquiring means acquires a luminance distribution of the measurement object by calculation based on an electrical signal obtained by the two-dimensional photoelectric conversion means when light specularly reflected from the measurement object when the measurement object is irradiated with illumination light having a pattern of a constant value by the illuminating means is received by the two-dimensional photoelectric conversion means.

5. The measuring device according to any one of claims 1 to 4, wherein a spatial resolution of the two-dimensional photoelectric conversion means is 100 µm or less.

6. The measuring device according to any one of claims 1 to 5, wherein a surface of the measurement object is subjected to surface texturing, and the surface evaluation index is an index relating to a characteristic amount of the surface subjected to the surface texturing.

7. The measuring device according to any one of claims 1 to 6, wherein before the calculation of the surface evaluation index, the calculating means performs first region division for dividing the surface profile distribution into a plurality of closed regions according to a height of the surface profile distribution by using a watershed segmentation method.

8. The measuring device according to claim 7, wherein the calculating means performs low-frequency filtering processing for removing a high-frequency component of the surface profile distribution before performing the first region division.

9. The measuring device according to claim 7 or 8, wherein the calculating means deletes coordinate information representing a closed region in contact with an edge of an image representing the plurality of closed regions obtained as a result of the first region division.

10. The measuring device according to any one of claims 1 to 6, wherein the calculating means performs second region division for acquiring coordinate information of a protrusion and a recess of the measurement object by performing Otsu's binarization on the surface profile distribution before the calculation of the surface evaluation index.

11. The measuring device according to any one of claims 1 to 10, wherein before the calculation of the surface evaluation index, the calculating means performs first region division for dividing the surface profile distribution into a plurality of closed regions according to a height of the surface profile distribution by using a watershed segmentation method, and second region division for acquiring coordinate information of a protrusion and a recess of the measurement object by performing Otsu's binarization on the surface profile distribution, and calculates the surface evaluation index using one or more of an image obtained as a result of the first region division, an image obtained as a result of the second region division, the surface profile distribution, and the two-dimensional luminance distribution.

12. The measuring device according to any one of claims 7 to 9, wherein the surface evaluation index is represented by the number of closed regions in an image obtained by the first region division.

13. The measuring device according to any one of claims 7 to 9, wherein the surface evaluation index is represented by an average of areas of the closed regions in an image obtained by the first region division.

14. The measuring device according to any one of claims 7 to 9, wherein the surface evaluation index is represented by an average value of heights in a same coordinate set in the surface profile distribution, the average value being obtained from coordinate information representing the closed regions in an image obtained by the first region division.

15. The measuring device according to any one of claims 1 to 6, wherein before the calculation of the surface evaluation index, the calculating means performs first region division for dividing the surface profile distribution into a plurality of closed regions by using a watershed segmentation method according to a height of the surface profile distribution, and second region division for acquiring coordinate information of a protrusion and a recess of the measurement object by performing Otsu's binarization on the surface profile distribution, and the surface evaluation index is represented by an average area of a same coordinate set in closed regions, the average area being obtained from the plurality of closed regions in an image obtained by the first region division and coordinate information representing the protrusion or the recess obtained by the second region division.

16. The measuring device according to claim 10 or 11, wherein the surface evaluation index is represented by an average value of luminance in a coordinate set in the two-dimensional luminance distribution, the average value being obtained from a coordinate set representing the protrusion and the recess obtained by the second region division.

17. The measuring device according to claim 10 or 11, wherein the surface evaluation index is obtained by calculating a contrast of an index value calculated for each of the protrusion and the recess obtained by the second region division.

18. The measuring device according to Claim 10 or 11, wherein the surface evaluation index includes an index obtained by determining, from a coordinate set representing the protrusion or the recess obtained by the second region division, an average value of absolute values of deviations from a reference plane in a same coordinate set in the surface profile distribution or in the two-dimensional luminance distribution.

19. The measuring device according to claim 10 or 11, wherein the surface evaluation index includes an index obtained by determining, from a coordinate set representing the protrusion or the recess obtained by the second region division, a square root of an average value of squares of deviations from a reference plane in a same coordinate set in the surface profile distribution or in the two-dimensional luminance distribution.

20. The measuring device according to claim 10 or 11, wherein the surface evaluation index is represented by an average value of wavelength components included in a coordinate set in the surface profile distribution, the average value being obtained from a coordinate set representing the protrusion or the recess obtained by the second region division.

21. The measuring device according to claim 10 or 11, wherein the surface evaluation index is obtained by determining, from a coordinate set representing the protrusion or the recess obtained by the second region division, a square root of an average value of squares of deviations from a reference plane in a horizontal direction or a vertical direction in the surface profile distribution in a same coordinate set in the surface profile distribution or in the two-dimensional luminance distribution.

22. The measuring device according to claim 10 or 11, wherein the surface evaluation index is represented by an average value of a radius of curvature of the protrusion, the average value being obtained from a coordinate set representing the protrusion obtained by the second region division.

23. The measuring device according to any one of claims 1 to 22, wherein the surface evaluation index represents directionality of a streak surface of unevenness in the surface profile distribution.

24. The measuring device according to claim 10 or 11, wherein the surface evaluation index is represented by an average value of local gradients in a coordinate set in the surface profile distribution, the average value being obtained from a coordinate set representing the protrusion obtained by the second region division.

25. A method of calculating a surface evaluation index, the method comprising:
performing profile distribution measurement to cause the profile distribution acquiring means of the measuring device according to any one of claims 1 to 24 to acquire a surface profile distribution of the measurement object based on an electrical signal obtained by the two-dimensional photoelectric conversion means;
performing luminance distribution measurement to cause the luminance distribution acquiring means to acquire a two-dimensional luminance distribution of the measurement object based on the electrical signal obtained by the two-dimensional photoelectric conversion means; and
causing the calculating means to calculate a surface evaluation index of the measurement object using at least one of the surface profile distribution of the measurement object acquired in the profile distribution measurement and the two-dimensional luminance distribution of the measurement object acquired in the luminance distribution measurement.

26. A program for causing a computer to execute:
acquiring a surface profile distribution of a measurement object based on an electrical signal obtained by a two-dimensional photoelectric conversion means disposed at a position where the two-dimensional photoelectric conversion means can receive light specularly reflected from the measurement object out of illumination light emitted from a single illuminating means to the measurement object;
acquiring a two-dimensional luminance distribution of the measurement object based on the electrical signal obtained by the two-dimensional photoelectric conversion means; and
calculating a surface evaluation index of the measurement object using at least one of the acquired surface profile distribution and the acquired two-dimensional luminance distribution of the measurement object.
